# EUROPÄISCHE PATENTSCHRIFT

(11) **EP 0 842 356 B1**
(45) Veröffentlichungstag und Bekanntmachung des Hinweises auf die Patenterteilung: **06.02.2002**
(21) Anmeldenummer: 97922987.9
(22) Anmeldetag: 07.05.1997
(51) Int. Cl.: F02F 7/00, F16J 9/02

(54) **MOTORBLOCK FÜR EINE MEHRZYLINDER-BRENNKRAFTMASCHINE**
ENGINE BLOCK FOR A MULTI-CYLINDER INTERNAL COMBUSTION ENGINE
BLOC MOTEUR DESTINE A UN MOTEUR A COMBUSTION INTERNE A PLUSIEURS CYLINDRES

(30) Priorität: 05.06.1996 DE 29609950 U
(43) Veröffentlichungstag der Anmeldung: 20.05.1998
(73) Patentinhaber: Eisenwerk Brühl GmbH, D-50321 Brühl (DE)
(72) Erfinder: VAN BEZEIJ, Nico, Johan, NL-5708 ED Stiphout/Helmond (NL)
(74) Vertreter: Langmaack, Jürgen, Dipl.-Ing.
(86) Internationale Anmeldenummer: EP9702316
(87) Internationale Veröffentlichungsnummer: WO9746799

(56) Entgegenhaltungen:
- DE-A- 3 737 211
- DE-B- 1 050 600
- DE-C- 4 334 444
- NL-A- 7 511 971

## Beschreibung

Insbesondere bei Mehrzylinder-Brennkraftmaschinen für Personenkraftfahrzeuge ist man bestrebt, das Gewicht weitestgehend zu reduzieren. Man war daher dazu übergegangen, die Zylinderblöcke aus Leichtmetall herzustellen, was jedoch zur Folge hatte, daß zwei unterschiedliche Materialien verwendet werden mußten, nämlich Leichtmetall für den Zylinderblock und entsprechende Grauguß-Qualitäten für die die Zylinder bildenden Laufbüchsen. Man war daher bemüht, durch konstruktive Maßnahmen einen Zylinderblock zu konzipieren, der bei entsprechend hoher Gestaltfestigkeit auch aus Grauguß hergestellbar war. Ein derartiger Zylinderblock ist in WO 94/07017 beschrieben. Bei der Verwendung entsprechender Grauguß-Qualitäten, beispielsweise Compact-Graphit-Guß (CGG), ist es möglich, auch einen dünnwandigen Zylinderblock herzustellen. Durch die Anordnung von U-förmigen Verstärkungsrippen auf der Außenseite des Wassermantels im Bereich der Teilungsebene zwischen je zwei benachbarten Zylindern und durch eine fluchtende Zuordnung der Zylinderkopfschrauben zu den Befestigungsschrauben des von unten angesetzten Lagerdeckels der Kurbelwellenlagerung ergibt sich ein definierter, geradliniger Kraftfluß zwischen Zylinderkopf und Kurbelwellenlagerung. Dies ermöglicht eine Festigkeitsberechnung mit hinreichender Genauigkeit, so daß bei der Bemessung der übrigen, weitgehend flächigen und als Mantel dienenden Teile des Zylinderblockesdie Wandstärke praktisch nur noch im Hinblick auf eine einwandfreie Gießbarkeit zu berücksichtigen ist. Der vorbekannte Zylinderblock ist jedoch so konzipiert, daß die die Lagergasse bildenden Teile der Lagerschalen jeweils in der Teilungsebene zwischen zwei Zylindern über entsprechende Stege angegossen sind.

Der Erfindung liegt nun die Aufgabe zugrunde, einen Zylinderblock zu schaffen, der eine noch weitergehende Gewichtsreduzierung ermöglicht.

Die Erfindung löst diese Aufgabe durch einen Zylinderblock für eine Mehrzylinder-Brennkraftmaschine mit mehrfach gelagerter Kurbelwelle und mit einem die Zylinder umschließenden Wassermantel, dessen nach unten verlängerte Außenwand sich in etwa bis in die Teilungsebene der Kurbelwellenlagerungen erstreckt und dessen umlaufender freier Rand eine Anlagefläche bildet, sowie mit einem an dieser Anlagefläche anliegenden und mit dieser verbundenen Grundrahmen, auf dem die Kurbelwellenlagerungen angeordnet sind, deren lösbare Lagerdeckel auf der den Zylindern zugewandten Seite des Grundrahmens angeordnet sind. Diese Ausgestaltung hat den Vorteil, daß die zwischen dem, den Zylinderblock nach oben abschließenden Zylinderkopf und den Kurbelwellenlagerungen aufzunehmenden Kräfte über die dem Grundrahmen zugeordneten Teile der Kurbelwellenlagerungen unmittelbar aufgenommen werden, so daß die zugehörigen Lagerdeckel und deren Befestigungsschrauben entsprechend geringere Kräfte aufzunehmen haben und damit entsprechend dünnwandiger bemessen werden können. Der Grundrahmen bietet zugleich eine erhebliche Versteifung des freien Randes der nach unten verlängerten Außenwandung des Wassermantels, so daß sich trotz der geringen Wandstärke eine hohe Gestaltfestigkeit des Gesamtblocks ergibt. Besonders vorteilhaft ist es, wenn zumindest der Zylinderblock aus Vermicular-Guß (GGV, vorteilhaft GGV 40) ausgeführt ist, der gegenüber anderen Gußqualitäten eine höhere Belastbarkeit durch Zugkräfte und eine hohe Eigendämpfung bei Schwingungsbeanspruchungen aufweist, so daß ein "Dröhnen" trotz der verhältnismäßig dünnen Wandungen weitgehend unterbunden ist. Ein weiterer Vorteil der erfindungsgemäßen Konstruktion besteht darin, daß die Kurbelwellenlagerungen am Grundrahmen vollständig montiert werden und erst dann die Verbindung mit dem Zylinderblock erfolgt.

In einer vorteilhaften Ausgestaltung der Erfindung ist vorgesehen, daß der Grundrahmen mit dem freien Rand der Außenwand des Wassermantels über Schrauben verbunden ist, wobei jeweils zwei Schrauben in der Mittelebene einer Kurbelwellenlagerung verlaufen. Hierdurch ist gewährleistet, daß der Kraftverlauf zwischen den Befestigungsschrauben des Zylinderkopfes und den Befestigungsschrauben des Grundrahmens in einer Ebene liegt. Hierdurch ergibt sich ferner, daß jeweils für einen Zylinder für vier Befestigungsschrauben des Zylinderkopfes entsprechend vier Befestigungsschrauben für den Grundrahmen vorgesehen sind.

In besonders vorteilhafter Ausgestaltung der Erfindung ist hierbei vorgesehen, daß die in der Mittelebene der Kurbelwellenlagerung angeordneten Schrauben zur Befestigung des Grundrahmens in etwa mit den Schrauben zur Befestigung des Zylinderkopfes fluchten. Aufgrund der durch die Anordnung der Grundrahmens bewirkten Verbesserung der Gestaltfestigkeit des Zylinderblockes genügt es, wenn die Befestigungsschrauben für den Grundrahmen in diesem Bereich möglichst dicht an der Kurbelwellenlagerung angeordnet sind. Ein genaues Fluchten, wie dies bei dem vorbekannten Zylinderblock noch vorgesehen wird, ist bei der erfindungsgemäßen Konzeption nicht erforderlich.

In vorteilhafter weiterer Ausgestaltung der Erfindung ist ferner vorgesehen, daß der Grundrahmen zusätzlich zu den in der Mittelebene der Kurbelwellenlagerungen angeordneten Schrauben mit dem Rand der Außenwandung des Wassermantels über jeweils zwei weitere Schrauben verbunden ist, die jeweils in einer durch die Zylinderachse verlaufenden Parallelebene angeordnet sind. Hierdurch ist es auch möglich, der äußeren Wandung des Wassermantels in ihrem unteren Bereich eine, im Horizontalschnitt gesehen, Wellenstruktur zu geben, die zu einer Erhöhung der Formsteifigkeit führt, und darüber hinaus unter Ausnutzung der verbesserten Zugfestigkeit von Vermicular-Grauguß auch diesen Teil der äußeren Wandung des Wassermantels mit in die Kraftübertragung zwischen dem Zylinderkopf einerseits und dem Grundrahmen andererseits mit einzubeziehen. Das bedeutet, daß jeweils den vier Befestigungsschrauben des Zylinderkopfes je Zylinder im zugehörigen Bereich des Grundrahmens jeweils sechs Befestigungsschrauben zugeordnet sind.

In weiterer vorteilhafter Ausgestaltung der Erfindung ist vorgesehen, daß am Zylinderblock in dem von der nach unten verlängerten Außenwandung des Wassermantels umschlossenen Bereich jeweils die unteren freien Ränder der Zylinder eine Begrenzungsebene gegenüber dem in Kurbelwellenlängsrichtung durchgehend freien Raum bilden. Hierdurch ist gegenüber den vorbekannten Konzeptionen, bei denen die Kurbelwellenlagerungen über Tragstege im Bereich der Teilungsebene zwischen je zwei benachbarten Zylindern angeordnet sind, eine erhebliche Gewichtsreduzierung möglich.

In weiterer vorteilhafter Ausgestaltung der Erfindung ist vorgesehen, daß die Außenwandung des Wassermantels jeweils mit wenigstens einer in der Teilungsebene zwischen zwei Zylindern verlaufenden, nach außen weisenden Zugrippe versehen ist, die sich zwischen dem Bereich der Aufnahmebohrungen der Zylinderkopfschrauben und dem Bereich der in der gleichen Ebene liegenden Aufnahmebohrungen der Befestigungsschrauben für den Grundrahmen erstreckt. Durch die Anordnung einer derartigen Zugrippe, die in dem hier stark eingezogenen Bereich der Außenwandung des Wassermantels verläuft, können die zwischen dem Zylinderkopf und dem Grundrahmen wirksamen und vom Zylinderblock aufzunehmenden Kräfte in erster Linie über diese Zugrippe aufgenommen werden, so daß der gewünschte definierte, möglichst geradlinige Kraftfluß zwischen Zylinderkopf und Grundrahmen noch verbessert wird.

In weiterer vorteilhafter Ausgestaltung der Erfindung ist ferner vorgesehen, daß der Grundrahmen an wenigstens einer Längsseite mit wenigstens einem längslaufenden ölkanal versehen ist, von dem jeweils in der Mittelebene einer Kurbelwellenlagerung ein Seitenkanal abzweigt, der jeweils in die auf dieser Seite in der Ebene verlaufenden Aufnahmebohrungen der Befestigungsschrauben für den Grundrahmen und den Lagerdeckel durchsetzt und im Lagerdeckel ausmündet. Gegenüber dem vorbekannten Zylinderblock, bei dem der Ölkanal noch in die Wandung des Wassermantels eingegossen war, bietet die erfindungsgemäße Lösung den Vorteil, daß der Ölkanal nunmehr in einem ohnehin relativ starkwandig auszubildenden Bereich des Grundrahmens angeordnet ist. Da der Grundrahmen in seinem geometrisch sehr viel einfacheren Aufbau für eine Bearbeitung leichter aufzuspannen ist, kann sowohl die Bearbeitung des längslaufenden Ölkanals als auch die Bearbeitung der von diesem abzweigenden Seitenkanäle durch eine einfache Bohroperation, ggf. in nur einer Aufspannung, bewerkstelligt werden. Zweckmäßig ist es hierbei, wenn die Aufnahmebohrungen für die Befestigungsschrauben des Grundrahmens und der Lagerdeckel jeweils in dem von einem Seitenkanal durchsetzten Bereich einen vergrößerten Durchmesser aufweisen. Diese Anordnung hat den Vorteil, daß für die Führung der Seitenkanäle keine zusätzlichen Materialzugaben am Grundrahmen vorgesehen werden müssen. Die Seitenkanäle können vielmehr jeweils in der Mittelebene einer Kurbelwellenlagerung geführt werden. Durch die Anordnung eines vergrößerten Bereichs in den Aufnahmebohrungen kann das für die Schmierung der Kurbelwellenlagerungen zuzuführende Öl jeweils die Befestigungsschrauben in diesem Bereich umströmen.

In weiterer vorteilhafter Ausgestaltung der Erfindung ist vorgesehen, daß der Grundrahmen mit den Lagerdeckeln der Kurbelwellenlagerungen als Funktionseinheit gegossen und bearbeitet wird, wobei die Lagerdeckel in Betriebsfunktion an den Grundrahmen angeformt und nachträglich abgetrennt sind. Diese Anordnung hat den Vorteil, daß der Grundrahmen mit seinen Kurbelwellenlagerungen einschließlich der zugehörigen Lagerdeckel als Einheit bearbeitet werden kann, wobei sowohl die Grundfläche des Grundrahmens als auch die der Anlagefläche am Wassermantel zugeordnete Anlagefläche des Grundrahmens ebenso wie die Gewindebohrungen für die Befestigungsschrauben, die Bohrungen von Ölkanal und Seitenkanälen bewerkstelligt werden kann. Die Lagerdeckel können hierbei entweder in einem ersten Schritt vom Grundrahmen abgetrennt werden und die Sitzflächen für die Lagerdeckel zusammen mit den entsprechenden Flächen des Grundrahmens bearbeitet werden. Zweckmäßig ist es jedoch, zunächst alle mechanischen Bearbeitungen der Flächen vorzunehmen und anschließend nach der vollständigen Bearbeitung die Lagerdeckel vom Grundrahmen abzuscheren, wobei mit Vorteil das Bruchverhalten des Graugußmaterials ausgenutzt wird.

Aus DE-A-37 37 211 ist es zwar bekannt, an einen Motorblock mit angegossenen Lagerstühlen die zugehörigen Lagerdeckel mit anzugießen und nach der Bearbeitung abzutrennen. Da die Lagerdeckel jedoch zusammen mit dem Motorblock gegossen werden, sind die Lagerdeckel in gleicher Weise ausgerichtet wie die zugehörigen Lagerstühle, wobei für die Verbindung der Lagerdeckel mit dem Lagerblock sehr stabile Verbindungsstege vorgesehen werden müssen, die anschließend zwar durchtrennt werden, die in ihrer Masse jedoch am Motorblock verbleiben und hier zu einer zusätzlichen Gewichtserhöhung führen, die ohne jegliche Funktion für den fertigen Motor ist.

Die Erfindung wird anhand schematischer Zeichnungen eines Zylinderblocks für eine Mehrzylinder-Brennkraftmaschine näher erläutert. Es zeigen:
- Fig. 1: eine Aufsicht auf einen Zylinderblock mit abgenommenem Zylinderkopf,
- Fig. 2: einen Vertikalschnitt gem. der Linie II-II in Fig. 1,
- Fig. 3: einen Vertikalschnitt gem. der Linie III-III in Fig. 1,
- Fig. 4: einen Horizontalschnitt durch den Wassermantel gem. der Linie IV-IV in Fig. 2 bzw. Fig. 3,
- Fig. 5: eine Ansicht auf die Anlagefläche der verlängerten Außenwandung des Wassermantels (Pfeil V in Fig. 2),
- Fig. 6: eine Ansicht auf die Standfläche des Grundrahmens (Pfeil VI in Fig. 2).

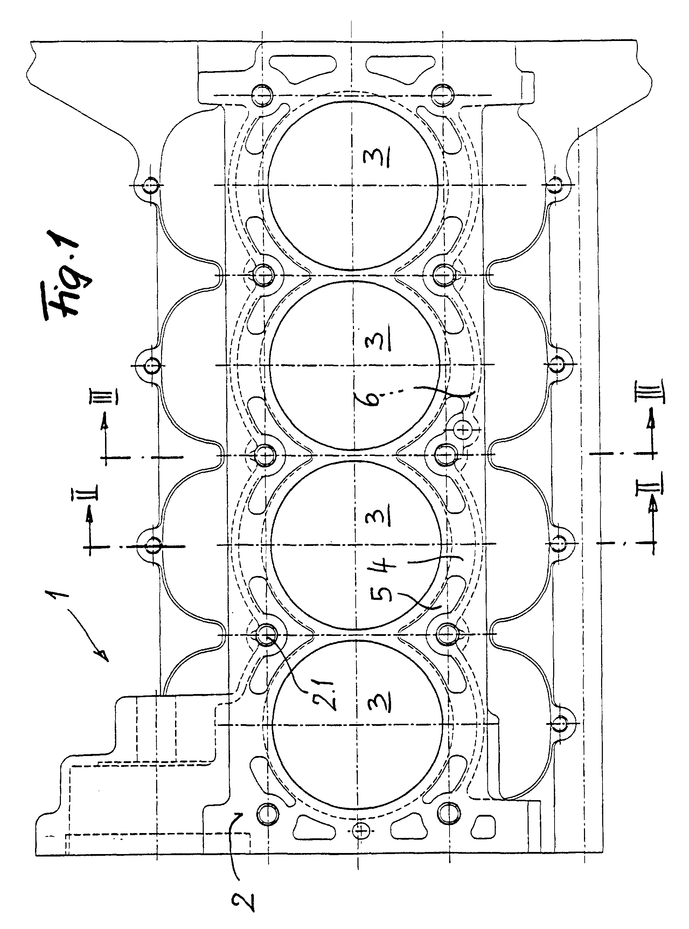

Der in Fig. 1 in einer Aufsicht dargestellte Motorblock 1 für einen Mehrzylinder-Reihenmotor ist hier mit abgenommenem Zylinderkopf dargestellt, so daß die zugehörige Dichtfläche 2 erkennbar ist. Wie die Aufsicht ferner erkennen läßt, sind die einzelnen Zylinder 3 stoffschlüssig verbunden und damit integraler Teil des Motorblocks 1. Die Zylinder 3 sind hierbei von einem Wassermantel 4 umgeben, dessen Durchtrittsöffnungen 5 in dem Bereich des abgenommenen Zylinderkopfes ebenfalls erkennbar sind. Der Zylinderkopf ist jeweils im Bereich der Teilungsebene zwischen zwei Zylindern über zwei Zylinderkopfschrauben verbindbar, hier durch deren Gewindebohrungen 2.1 erkennbar, so daß je Zylinder insgesamt vier Befestigungsschrauben 2.1 vorhanden sind. Der Wassermantel 4 ist zur Innenseite durch den jeweiligen Zylinder und zur Außenseite durch eine Außenwandung 6 begrenzt.

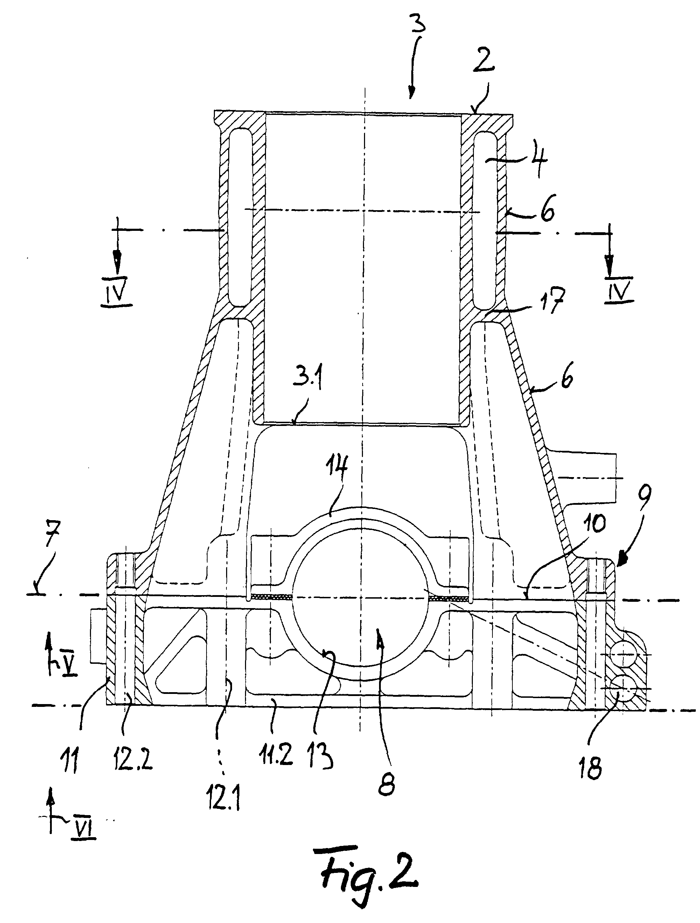

Der in Fig. 2 dargestellte Vetikalschnitt entlang der Linie II-II in Fig. 1 zeigt hier den Grundaufbau. Bereits anhand von Fig. 1 beschriebene Bauteile sind mit den gleichen Bezugszeichen versehen, so daß diese anhand der Bezugszeichen in Fig. 2 ohne weiteres identifiziert werden können.

Wie die Schnittdarstellung erkennen läßt, ist die Außenwandung 6 des Wassermantels 4 bis in den Bereich der Teilungsebene 7 der Kurbelwellenlagerung 8 verlängert. An ihrem umlaufenden freien Rand 9 ist die verlängerte Außenwandung 6 mit einer Anlagefläche 10 versehen, an der ein Grundrahmen 11 anliegt und über Befestigungsschrauben befestigt ist, wobei die Befestigungsschrauben hier nur durch die zugehörigen Durchgangslöcher und Gewindebohrungen dargestellt sind. Zur Vereinfachung der zeichnerischen Darstellung sind hier lediglich die Durchgangs- und/oder Gewindelöcher 12 für diese Befestigungsschrauben dargestellt.

Die Kurbelwellenlagerung 8 am Grundrahmen 11 ist nun so konzipiert, daß der am Grundrahmen 11 befindliche Lagerschalenteil 13 in Richtung auf den Zylinder 3 weist, so daß der zugehörige Lagerdeckel 14 auf der den Zylindern 3 zugekehrten Seite des Grundrahmens 11 angeordnet ist.

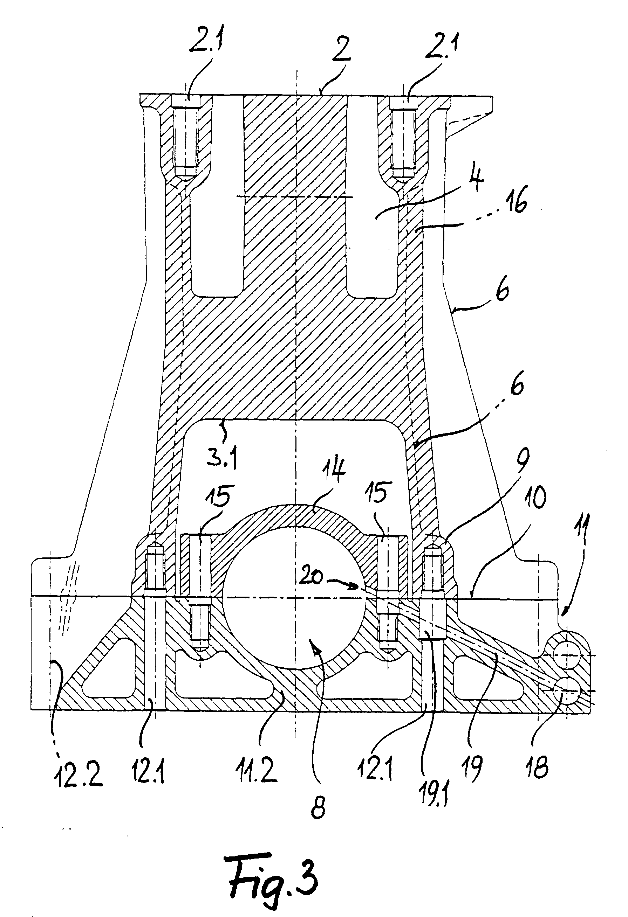

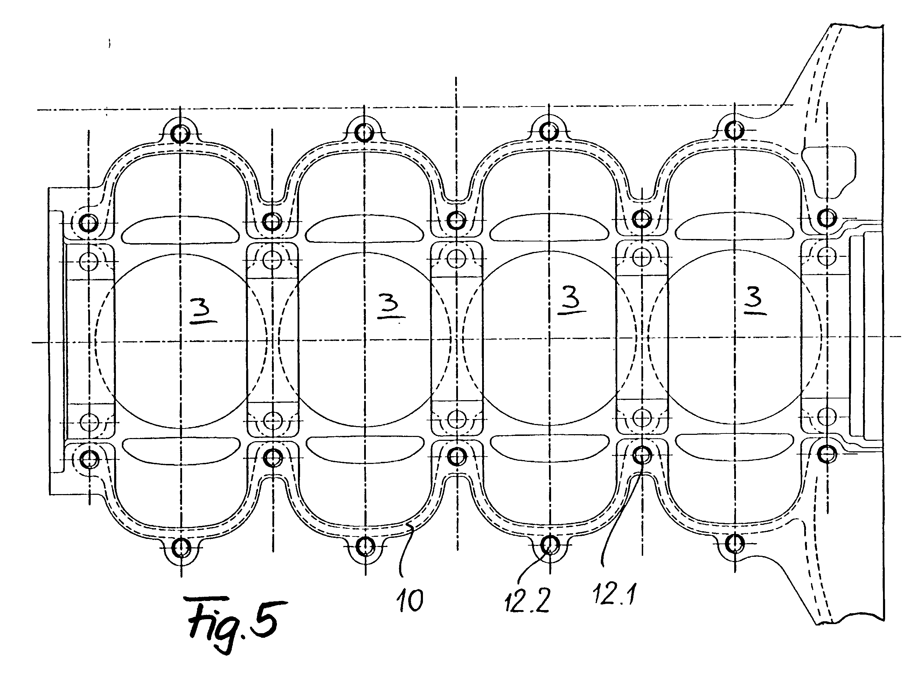

Fig. 3 zeigt nun den Vertikalschnitt gem. der Linie III-III in Fig. 1, der durch die Teilungsebene zwischen je zwei benachbarten Zylindern verläuft. Wie aus einem Vergleich der Aufsicht gem. Fig. 1 sowie der Schnittdarstellung in Fig. 2 und Fig. 3 erkennbar ist, weist die verlängerte Außenwandung 6 nicht nur im Bereich des Wassermantels 4 sondern auch in ihrer Verlängerung im Bereich der Teilungsebene 7 in einem Horizontalschnitt eine Wellenstruktur auf, wobei jeweils der "Wellenscheitel" im Bereich der Schnittebene II-II und das "Wellental" im Bereich der Schnittebene III-III liegt. Dies ist auch in der in Fig. 5 dargestellten, gegen die Anlagefläche 10 der verlängerten Außenwandung 6 des Wassermantels 4 gerichteten Ansicht von unten zu erkennen. Fig. 5 zeigt diese Ansicht bei abgenommenem Grundrahmen. Die Schraubenlöcher 12 für die Schrauben zur Befestigung des Grundrahmens sind in ihrer geometrischen Zuordnung zu dem jeweiligen Zylinder ebenfalls zu erkennen. Dies wird nachstehend noch näher beschrieben werden.

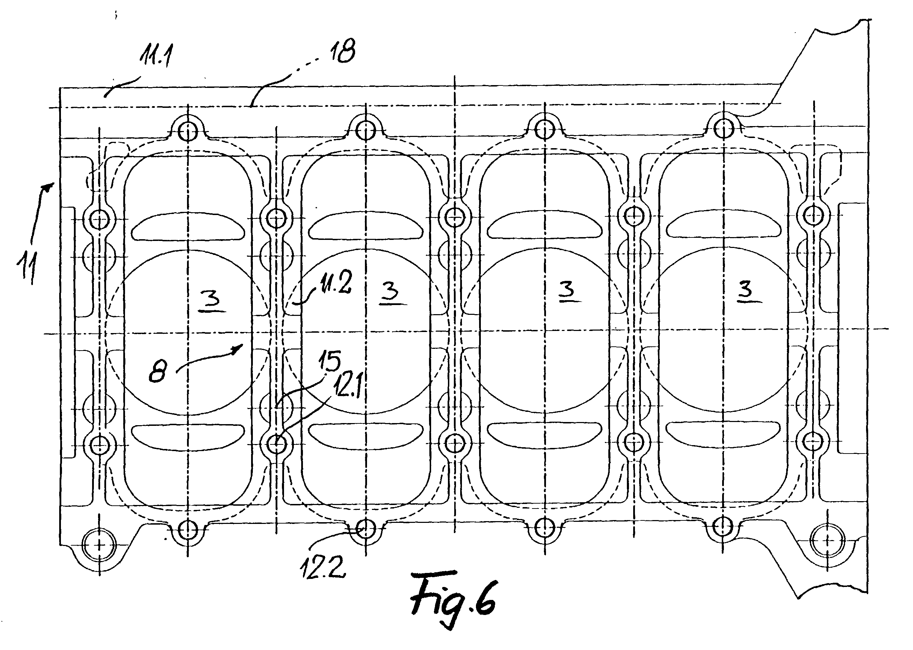

In Fig. 6 ist dann ebenfalls in einer Ansicht von unten der Grundrahmen 11 dargestellt. Wie die Ansicht erkennen läßt, weist der Grundrahmen 11 einen äußeren, umlaufenden Rahmenteil 11.1 auf, der jeweils im Bereich der Teilungsebene zwischen zwei benachbarten Zylindern 3, die hier nur angedeutet sind, mit Querstegen 11.2 versehen ist. Auf diesen Querstegen 11.2 ist dann jeweils die Kurbelwellenlagerung 8 angeordnet.

Auch in dieser Darstellung sind jeweils die Schraubenlöcher 12 für die Befestigungsschrauben zur Verbindung des Grundrahmens 11 am freien Rand 9 der verlängerten Außenwandung 6 des Wassermantels zu erkennen. Die Zuordnung der Befestigungsschrauben 15 der Lagerdeckel 14 der einzelnen Kurbelwellenlagerungen 8 ist in Fig. 6 durch die Kennzeichnung ihrer Längsachse ebenfalls ersichtlich.

Wie aus Fig. 2, 3, 5 und 6 ersichtlich, sind nun die Durchgangslöcher 12 für die Befestigungsschrauben zur Befestigung des Grundrahmens 11 jeweils so angeordnet, daß sich die Durchgangslöcher 12.1 jeweils in einem "Wellental" der Wellenstruktur der Außenwandung 6 des Wassermantels 4 befinden, während die anderen Durchgangslöcher 12.2 sich jeweils im Bereich eines "Wellenscheitels" befinden. Damit ist der Grundrahmen 11 jeweils mit sechs Schrauben je Zylinder befestigt, während der Zylinderkopf, wie die Aufsicht gem. Fig. 1 zeigt, jeweils mit vier Schrauben je Zylinder befestigt ist. Die Anordnung ist hierbei nun so getroffen, daß die Durchgangslöcher 12.1 mit den Zylinderkopfschrauben 2.1 nahezu fluchten, so daß die im Betrieb jeweils beim Arbeits- und beim Kompressionshub auftretenden Zugkräfte im Bereich des Zylinderkopfes von vier Schrauben und im Bereich des Grundrahmens 11 von jeweils sechs Schrauben aufgenommen werden. Von Bedeutung ist hierbei, daß die auf die Kurbelwellenlagerung 8 wirkenden Kräfte jeweils über der Steg 11.2 aufgenommen werden, so daß jeweils die Befestigungsschrauben 15 der Lagerdeckel 14 einer erheblich geringeren Belastung ausgesetzt sind und dementsprechend sowohl die Befestigungsschrauben 15 als auch der Lagerdeckel 14 sehr viel dünnwandiger und damit gewichtsreduzierend konzipiert werden kann. Da die jeweils in einem "Wellental" liegenden Befestigungsschrauben 12.1 für den Grundrahmen 11 nahezu fluchtend zu den Zylinderkopfschrauben 2.1 angeordnet sind, erfolgt hier eine praktisch geradlinige Übertragung der Zugkräfte zwischen Zylinderkopf einerseits und Grundrahmen 11 andererseits.

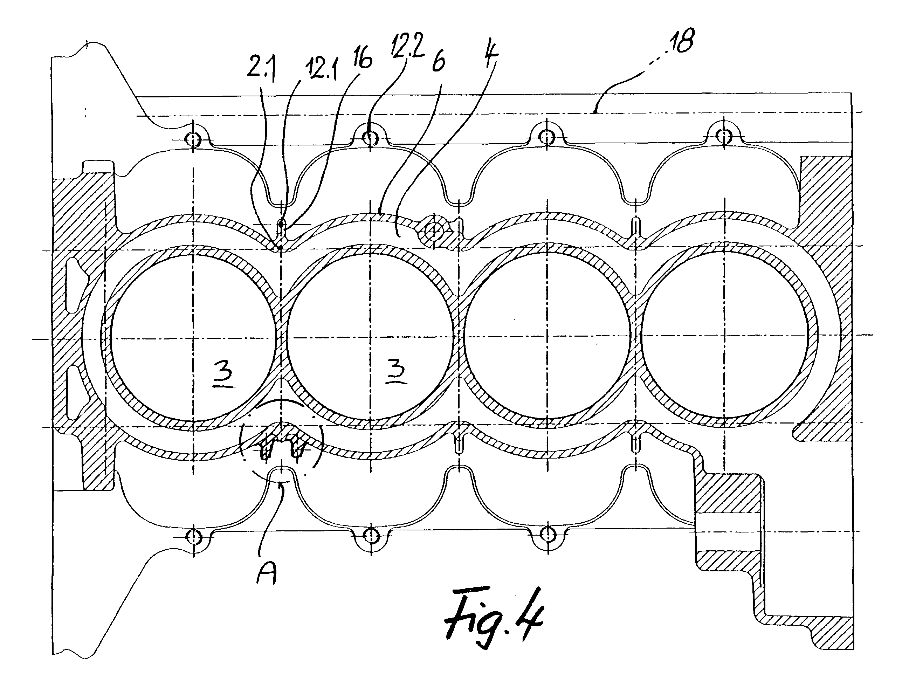

Zur Erhöhung der Zugfestigkeit des Materials der Außenwandung 6 des Wassermantels 4 ist jeweils in der Teilungsebene zwischen zwei Zylindern 3 eine nach außen weisende Zugrippe 16 vorgesehen, wie dies aus dem Horizontalschnitt gem. Fig. 4 und dem Vertikalschnitt gem. Fig. 3 ersichtlich ist. In einer Abwandlung der Konzeption ist es jedoch möglich, anstelle einer Zugrippe zwei parallel verlaufende Zugrippen vorzusehen, wie dies in Fig. 4 durch den durch den Kreis A gekennzeichneten Bereich angedeutet ist.

In Fig. 4 sind ferner jeweils durch ihre Mittelachse die Positionen der Durchgangs- und/oder Gewindelöcher 12.1 am freien Rand 9 sowie der Zylinderkopfschrauben 2.1 gekennzeichnet.

Wie vorstehend beschrieben, sind die Kurbelwellenlagerungen 8 auf dem Grundrahmen 11 angeordnet, der in sich wiederum zumindest im Bereich der Stege 11.2 als Rahmenkonstruktion ausgebildet sein kann. Damit bleibt der darüberliegende Raumbereich durchgehend frei und wird nach oben jeweils nur durch die Begrenzungswand 17 des Wassermantels 4 begrenzt, wobei lediglich des untere Ende 3.1 des jeweiligen Zylinders in diesen Raum hineinragt, wie dies in Fig. 3 zu erkennen ist. Die sonst übliche Materialanhäufung für die Stege der Kurbelwellenlagerungen entfällt hierbei.

Die Ölversorgung für die einzelnen Kurbelwellenlagerungen 8 kann nun in der Weise gestaltet werden, daß an einer Seite des Grundrahmens 11 ein längslaufender Ölkanal 18 angeordnet ist, von dem aus jeweils im Bereich eines Steges 11.2 ein Seitenkanal 19 abzweigt, der sich bis in den Bereich des Lagerdeckels 14 erstreckt. Da bei der gegebenen Anordnung durch den Seitenkanal 19 jeweils die Aufnahmebohrungen 12.1 für die Befestigungsschrauben des Grundrahmens sowie die Aufnahmebohrungen für die Befestigungsschrauben 15 des Lagerdeckels 14 durchstoßen werden, ist die Anordnung in diesem Bereich so getroffen, daß jeweils im Durchtrittsbereich des Seitenkanals 19 die Bohrungen 12 und die Bohrungen für die Schrauben 15 jeweils in diesem Bereich eine Erweiterung 19.1 aufweisen, so daß in montiertem Zustand das aus dem längslaufenden ölkanal 18 durch den Seitenkanal 19 fließende Öl in diesem Bereich die eingeführten Befestigungsschrauben umströmt und so über die Austrittsöffnung 20 im Lagerdeckel 14 dem zugehörigen Kurbelwellenlager zugeführt werden kann.

## Patentansprüche

1. Zylinderblock für eine Mehrzylinder-Brennkraftmaschine, mit einer mehrfach gelagerten Kurbelwellen und mit einem die Zylinder (3) umschließenden Wassermantel (4), dessen nach unten verlängerte Außenwandung (6) sich in etwa bis in die Teilungsebene (7) der Kurbelwellenlagerung (8) erstreckt und dessen umlaufender freier Rand (9) eine Anlagefläche (10) bildet, sowie mit einem an dieser Anlagefläche (10) anliegenden und mit dieser verbundenen Grundrahmen (11), auf dem die Kurbelwellenlagerungen (8) angeordnet sind, deren lösbare Lagerdeckel (14) auf der den Zylindern (3) zugekehrten Seite des Grundrahmens (11) angeordnet sind.

2. Zylinderblock nach Anspruch 1, **dadurch gekennzeichnet, daß** der Grundrahmen (11) mit dem freien Rand (9) der Außenwandung (6) des Wassermantels (4) über Schrauben (12) verbunden ist, wobei jeweils zwei Schrauben (12.1) in der Mittelebene einer Kurbelwellenlagerung (8) verlaufen.

3. Zylinderblock nach Anspruch 1 oder 2, **dadurch gekennzeichnet, daß** die in der Mittelebene der Kurbelwellenlagerung (8) angeordneten Schrauben (12.1) zur Befestigung des Grundrahmens (11) in etwa mit den Schrauben (2.1) zur Befestigung des Zylinderkopfes fluchten.

4. Zylinderblock nach einem der Ansprüche 1 bis 3, **dadurch gekennzeichnet, daß** der Grundrahmen (11) zusätzlich zu den in der Mittelebene der Kurbelwellenlagerung (8) angeordneten Schrauben (12.1) mit dem Rand (9) der Außenwandung (6) des Wassermantels (4) über jeweils zwei weitere einem Zylinder (3) zugeordneten Schrauben (12.2) verbunden ist, die jeweils in einer durch die Zylinderachse verlaufende Parallelebene angeordnet sind.

5. Zylinderblock nach einem der Ansprüche 1 bis 4, **dadurch gekennzeichnet, daß** in dem von der nach unten verlängerten Außenwandung (6) des Wassermantels (4) umschlossenen Bereich die unteren freien Ränder (3.1) der Zylinder (3) eine Begrenzungsebene gegenüber dem in Kurbelwellenlängsrichtung durchgehenden freien Raum bilden.

6. Zylinderblock nach einem der Ansprüche 1 bis 5, **dadurch gekennzeichnet, daß** die Außenwandung (6) des Wassermantels (4) jeweils mit wenigstens einer in der Teilungsebene zwischen zwei Zylindern (3) verlaufenden, nach außen weisenden Zugrippe (16) versehen ist, die sich zwischen dem Bereich der Aufnahmebohrung (2.1) der Zylinderkopfschrauben und dem Bereich der in der gleichen Ebene liegenden Aufnahmebohrungen (12.2) der Befestigungsschrauben für den Grundrahmen (11) erstreckt.

7. Zylinderblock nach einem der Ansprüche 1 bis 6, **dadurch gekennzeichnet, daß** der Grundrahmen (11) an wenigstens einer Längsseite mit wenigstens einem längslaufenden Ölkanal (18) versehen ist, von dem jeweils in der Mittelebene einer Kurbelwellenlagerung (8) ein Seitenkanal (19) abzweigt, der jeweils die auf dieser Seite in der Ebene verlaufenden Aufnahmebohrungen (12.1) der Befestigungsschrauben für den Grundrahmen (11) und der Lagerdeckel (14) durchsetzt und im Lagerdeckel (14) ausmündet.

8. Zylinderblock nach einem der Ansprüche 1 bis 7, **dadurch gekennzeichnet, daß** die Aufnahmebohrungen (12.1) für die Befestigungsschrauben des Grundrahmens (11) und der Lagerdeckel (14) jeweils in dem von Seitenkanal (19) durchsetzten Bereich einen vergrößerten Durchmesser (19.1) aufweisen.

9. Zylinderblock nach einem der Ansprüche 1 bis 8, **dadurch gekennzeichnet, daß** der Grundrahmen (11) mit den Lagerdeckeln (14) der Kurbelwellenlagerungen (8) als Funktionseinheit gegossen und bearbeitet ist, wobei die Lagerdeckel (14) in Betriebsfunktions an den Grundrahmen (11) angeformt und nachträglich abgetrennt sind.

## Claims

1. A cylinder block for a multi-cylinder internal combustion engine, having a multiple bearing crankshaft and having a water jacket (4) enclosing the cylinders (3), the downwardly extended outer wall (6) of which water jacket (4) extends approximately as far as into the parting plane (7) of the crankshaft bearing arrangement (8) and the surrounding free edge (9) of which water jacket (4) forms a bearing surface (10), and also having a base frame (11) lying against said bearing surface (10) and connected therewith, on which base frame (11) there are arranged the crankshaft bearing arrangements (8), the detachable bearing caps (14) of which are arranged on the side of the base frame (11) facing the cylinders (3).

2. A cylinder block according to claim 1, **characterised in that** the base frame (11) is connected to the free edge (9) of the outer wall (6) of the water jacket (4) via screws (12), two screws (12.1) in each case extending in the central plane of a crankshaft bearing arrangement (8).

3. A cylinder block according to claim 1 or claim 2, **characterised in that** the screws (12.1) arranged in the central plane of the crankshaft bearing arrangement (8) for securing the base frame (1) are roughly aligned with the screws (2.1) for securing the cylinder head.

4. A cylinder block according to one of claims 1 to 3, **characterised in that**, in addition to the screws (12.1) arranged in the central plane of the crankshaft bearing arrangement (8), the base frame (11) is connected to the edge (9) of the outer wall (6) of the water jacket (4) via in each case two further screws (12.2) associated with a cylinder (3), which screws (12.2) are in each case arranged in a parallel plane extending through the cylinder axis.

5. A cylinder block according to one of claims 1 to 4, **characterised in that**, in the area enclosed by the downwardly extended outer wall (6) of the water jacket (4), the lower free edges (3.1) of the cylinders (3) form a boundary plane relative to the clear space extending in the longitudinal direction of the crankshaft.

6. A cylinder block according to one of claims 1 to 5, **characterised in that** the outer wall (6) of the water jacket (4) is provided in each case with at least one outwardly directed tension rib (16) extending in the parting plane between two cylinders (3), which tension rib (16) extends between the area of the receiving bore (2.1) of the cylinder head screws and the area of the receiving bores (12.2), lying in the same plane, of the securing screws for the base frame (11).

7. A cylinder block according to one of claims 1 to 6, **characterised in that** the base frame (11) is provided on at least one longitudinal side with at least one longitudinally extending oil duct (18), from which a side duct (19) branches off in each case in the central plane of a crankshaft bearing arrangement (8), which side duct (19) in each case passes through the receiving bores (12.1), extending on the respective side in the plane, of the securing screws for the base frame (11) and the bearing caps (14) and opens in the bearing cap (14).

8. A cylinder block according to one of claims 1 to 7, **characterised in that** the receiving bores (12.1) for the securing screws of the base frame (11) and the bearing cap (14) in each case comprise an enlarged diameter (19.1) in the area through which side duct (19) passes.

9. A cylinder block according to one of claims 1 to 8, **characterised in that** the base frame (11) is cast and machined together with the bearing caps (14) of the crankshaft bearing arrangements (8) as a functional unit, the bearing caps (14) being moulded onto the base frame (11) during operation and subsequently detached.

## Revendications

1. Bloc-cylindres destiné à un moteur à combustion interne à plusieurs cylindres, comportant un vilebrequin à plusieurs paliers et une enveloppe d'eau (4) entourant les cylindres (3), dont la paroi extérieure (6) prolongée vers le bas s'étend sensiblement jusque dans le plan de séparation (7) des paliers (8) de vilebrequin, et dont le bord libre périphérique (9) forme une surface d'appui (10), ainsi qu'un cadre de base (11) qui prend appui sur cette surface d'appui (10) et qui est relié à cette dernière, sur lequel sont disposés les paliers (8) de vilebrequin, dont les chapeaux (14) de palier amovibles sont disposés du côté du cadre de base (11) orienté vers les cylindres (3).

2. Bloc-cylindres selon la revendication 1, **caractérisé en ce que** le cadre de base (11) est relié au bord libre (9) de la paroi extérieure (6) de l'enveloppe d'eau (4) par l'intermédiaire de vis (12), deux vis (12.1) s'étendant respectivement dans le plan médian d'un palier (8) de vilebrequin.

3. Bloc-cylindres selon la revendication 1 ou 2, **caractérisé en ce que** les vis (12.1) disposées dans le plan médian des paliers (8) de vilebrequin pour la fixation du cadre de base (11), sont sensiblement alignées avec les vis (2.1) destinées à la fixation de la culasse de cylindres.

4. Bloc-cylindres selon l'une quelconque des revendications 1 à 3, **caractérisé en ce que**, en plus des vis (12.1) disposées dans le plan médian des paliers (8) de vilebrequin, le cadre de base (11) est relié au bord (9) de la paroi extérieure (6) de l'enveloppe d'eau (4) par l'intermédiaire de deux autres vis (12.2) associées à un cylindre (3), qui sont disposées dans un plan parallèle passant par l'axe de cylindre.

5. Bloc-cylindres selon l'une quelconque des revendications 1 à 4, **caractérisé en ce que**, dans la zone entourée par la paroi extérieure (6) prolongée vers le bas de l'enveloppe d'eau (4), les bords inférieurs libres (3.1) des cylindres (3) forment un plan de délimitation par rapport à l'espace libre continu dans la direction longitudinale du vilebrequin.

6. Bloc-cylindres selon l'une quelconque des revendications 1 à 5, **caractérisé en ce que**, dans le plan de séparation entre deux cylindres (3), la paroi extérieure (6) de l'enveloppe d'eau (4) est munie d'au moins une nervure de traction (16) orientée vers l'extérieur, qui s'étend entre la zone du perçage de réception (2.1) des vis de la culasse de cylindres et la zone des perçages de réception (12.2), situées dans le même plan, des vis de fixation pour le cadre de base (11).

7. Bloc-cylindres selon l'une quelconque des revendications 1 à 6, **caractérisé en ce que**, sur l'un au moins de ses côtés longitudinaux, le cadre de base (11) est muni d'au moins un canal d'huile (18) s'étendant dans la direction longitudinale, duquel un canal latéral (19) part à chaque fois dans le plan médian d'un palier (8) de vilebrequin, lequel passe à travers les perçages de réception (12.1) des vis de fixation pour le cadre de base (11) et le chapeau (14) de palier situés de ce côté dans ce plan, et qui débouche dans le chapeau (14) de palier.

8. Bloc-cylindres selon l'une quelconque des revendications 1 à 7, **caractérisé en ce que**, dans la zone traversée par le canal latéral (19), les perçages de réception (12.1) pour les vis de fixation du cadre de base (11) et le chapeau (14) de palier ont un diamètre plus important (19.1).

9. Bloc-cylindres selon l'une quelconque des revendications 1 à 8, **caractérisé en ce que** le cadre de base (11) est coulé et usiné avec les chapeaux (14) des paliers (8) de vilebrequin en tant qu'unité fonctionnelle, les chapeaux (14) de paliers étant formés sur le cadre de base (11) en fonction de service, et étant dissociés ultérieurement.
